# EUROPEAN PATENT SPECIFICATION

(11) **EP 2 933 510 B1**
(45) Date of publication and mention of the grant of the patent: **08.03.2017**
(21) Application number: 15163906.9
(22) Date of filing: 16.04.2015
(51) Int. Cl.: F16C 23/04, B61G 5/02, F16C 33/04, F16C 11/06, F16C 33/20

(54) **RADIAL SPHERICAL PLAIN BEARING FOR COUPLING ARTICULATED TRAINS**
RADIAL-GELENKLAGER ZUM KUPPELN VON GLIEDERZÜGEN
ROTULE LISSE RADIALE POUR ATTELER DES TRAINS ARTICULÉS

(30) Priority: 16.04.2014 GB 201406858
(43) Date of publication of application: 21.10.2015
(73) Proprietor: Minebea Co. Ltd., Kitasaku-gun, Nagano 389-0293 (JP)
(72) Inventor: Dasyan, Arjuna, Lincoln, Lincolnshire LN6 3RA (GB)
(74) Representative: Harding, Andrew Philip

(56) References cited:
- US-A- 5 172 819
- US-A- 5 520 295
- US-A- 5 586 506
- US-A1- 2009 252 443

## Description

The present invention relates to a bearing assembly. More specifically, the present invention relates to a high load (reverse load) thrust coupling bearing.

The carriages of rolling stock (for example trams) are typically connected to one another by an articulated joint in the form of a thrust coupling bearing. The bearing allows two connected carriages to rotate with respect to one another along the horizontal plane, for example when the carriages are navigating a turn. Particularly in relation to trams, the carriages may also be required to travel over pronounced crests and through pronounced troughs. Accordingly, a thrust coupling bearing preferably allows relative rotation of the two parts of the bearing in all rotational degrees of freedom, at least to a limited extent.

There is a complex system of forces acting on the thrust coupling bearing in use. The bearing must withstand substantial horizontal (radial) loading, caused by the bearing being the only means of mechanical connection between two carriages. Furthermore, the bearing must be able to withstand vertical (axial) forces, caused when carriages travel over a crest or through a trough.

A prior art thrust coupling bearing is known from EP1925527 and EP1650098.

Other bearing arrangements are known from US5172819, US2009/0252443, US5586506 and US5520295.

There is a need for an improved bearing assembly.

Accordingly, the present invention provides a bearing assembly comprising: an outer housing; a plurality of split race portions arranged at least partially within the outer housing to define an annular composite bearing race having an inner surface, the plurality of split race portions comprising two split race portions with axial split faces; an annular bearing insert comprising a plurality of bearing insert portions and arranged at least partially within the composite bearing race having a truncated substantially spherical inner bearing surface ; the plurality of bearing insert portions comprising two bearing insert portions with axial split faces, wherein the respective pairs of split faces of the split race portions and the bearing insert portions are misaligned; an inner ball having a truncated substantially spherical outer bearing surface, wherein the inner ball is rotatably held within the bearing insert, configured such that, when the longitudinal axis of the inner ball is aligned with the longitudinal axis of the annular bearing insert, the outer bearing surface of the inner ball extends beyond the inner bearing surface of the bearing insert in both axial directions a bearing assembly.

Preferably, the outer housing comprises a base and a generally cylindrical side wall upstanding from the base, an inner surface of the side wall defining a substantially cylindrical first recess.

Advantageously, the base comprises a second recess, defining an annular support sill between the lower end of the side wall and the rim of the second recess.

Conveniently, the outer housing further includes a plurality of mounting holes, for securing the outer housing to a vehicle component, in use.

Preferably, the outer housing further includes a plurality of fixing holes, for securing the split race portions to the outer housing in use.

Preferably, the split faces of the split race portions are arranged substantially perpendicular to the radial load imposed on the bearing assembly in use.

Advantageously, the split race portions further comprise upper and lower collars, bounding the inner surface of the composite bearing race.

Conveniently, the annular bearing insert is received between the upper and lower collars (1.

Preferably, the radial thickness of the upper and lower collars is less than the radial thickness of the annular bearing insert.

Advantageously, the split race portions comprise a plurality of fixing holes, for securing the split race portions to the outer housing in use. Advantageously, the misalignment is by substantially 90 degrees about the longitudinal axis.

Conveniently, the inner ball further comprises a mounting flange connected to the inner ball by a neck.

Preferably, the mounting flange comprises a plurality of mounting holes, for securing the inner ball to a vehicle component, in use

Advantageously, the inner ball further comprises a through-hole.

Conveniently, the bearing assembly is configured such that, when the longitudinal axis of the inner ball is aligned with the longitudinal axis of the annular bearing insert, the outer bearing surface of the inner ball extends beyond the inner bearing surface of the bearing insert more in one axial direction than it does the other axial direction.
Embodiments of the present invention will now be described, by way of nonlimiting example only, with reference to the following figures in which:
Figure 1 illustrates a cross-section of a bearing assembly embodying the present invention;
Figure 2 illustrates an enlarged view of part of the bearing assembly of figure 1; and
Figure 3 illustrates an enlarged view of another part of the bearing assembly of figure 1.

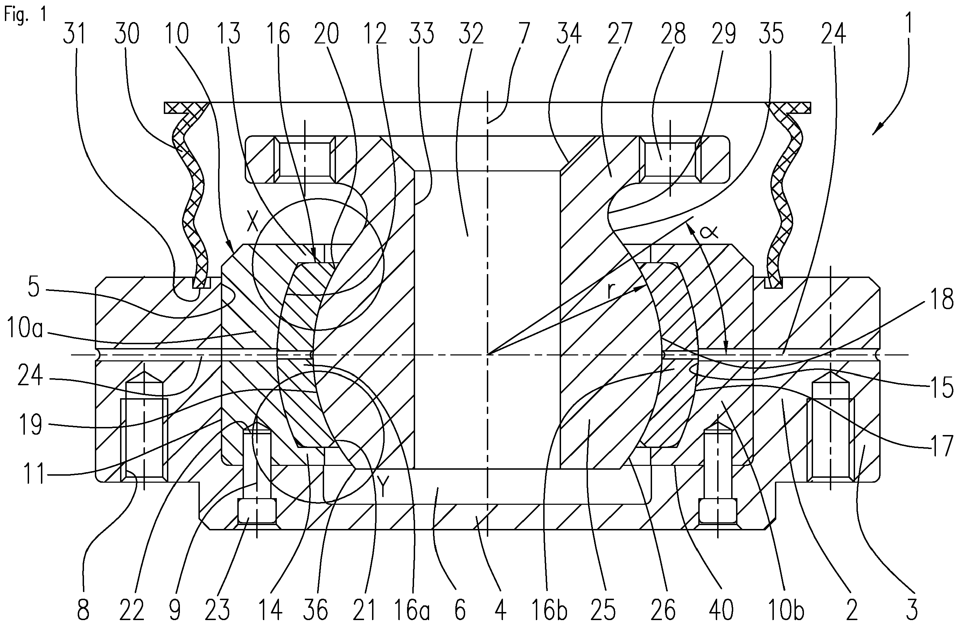

With reference to figure 1, there is illustrated a bearing assembly 1 comprising an outer housing 2. The outer housing 2 comprises a side wall 3 upstanding from a base 4. An inner surface 5 of the side wall 3 is substantially cylindrical and defines a first closed recess between the side wall 3 and the base 4.

The base 4 further comprises a second recess 6. The diameter of the second recess 6 is preferably smaller than the diameter of the inner surface 5 of the wall 3. As a result, an annular support sill 40 is defined between the lower end of the side wall 3 and the upper rim of the second recess 6.

Figure 1 illustrates the bearing assembly 1 in its "neutral" position. A longitudinal axis 7 illustrated in figure 1 is that of the centre of the cylindrical inner surface 5 of the side wall 3.

The outer housing 2 further comprises mounting holes 8, for securing the outer housing 2 to a vehicle component, in use (not shown). In the embodiment shown, the mounting holes 8 comprise a cylindrical bore and a countersunk recess for receiving the head of a bolt (not shown) there through. In the embodiment shown, the mounting hole 8 is provided axially through the side wall 3 of the outer housing 2.

The outer housing 2 further comprises a plurality of fixing holes 9, for securing the outer housing 2 to split race portions 10a, 10b (described below).

The bearing assembly 1 further comprises an annular composite bearing race 10 defined by a plurality of split race portions 10a, 10b. The composite bearing race 10 comprises an outer surface 11. The outer surface 11 is preferably substantially cylindrical, and has substantially the same diameter as the inner surface 5 of the side wall 3 of the outer housing 2. Preferably, there is a non-interference fit between the outer surface 11 of the annular bearing race 10 and the inner surface 5 of the side wall 3. The longitudinal axis of the bearing race 10 is co-axial with that of the side wall 3 of the outer housing 2.

The annular bearing race 10 further defines an inner surface 12, bounded by an upper collar 13 and a lower collar 14. The split race portions 10a, 10b, comprise a plurality of fixing holes 22. Bolts 23 are illustrated in figure 1, securing the split race portions 10a, 10b to the outer housing 2. Preferably, the inner surface of the fixing holes 22 in the split race portions 10a, 10b is threaded to receive the threaded shaft of the bolts 23 therein.

The split race portions 10a, 10b have axial split faces. That is to say, the plane of the mating faces of each split race portion 10a, 10b (when connected to create an annular bearing race 10), are coplanar with the longitudinal axis 7.

In use, the split faces are preferably arranged substantially perpendicular to the direction of the radial load imposed on the bearing assembly 1. This is so that none, or a limited amount, of the radial load is imposed on the annular bearing race 10 at the intersection of the mating split faces of each of the split race 10 portions 10a, 10b.

The bearing assembly 1 further comprises an annular bearing insert 16, which is received within a recess 15 bounded in an axial direction by the upper 13 and lower 14 collars and the inner surface 12 of the annular bearing race 10.

The bearing insert 16 comprises a plurality of bearing inserts portions 16a, 16b, in a similar fashion to the split race portions 10a, 10b. The respective pairs of split faces of the split race portions 10a, 10b and the bearing insert portion 16a, 16b are misaligned. In one embodiment, the misalignment may be 90º.

Preferably, the annular bearing insert 16 extends beyond the upper 13 and lower 14 collars on the annular bearing race 10 radially inwards. This is such that, in use, the upper 13 and lower 14 collars do not impinge on an outer spherical bearing surface 26 of an inner ball 25 (described below).

An outer surface 17 of the bearing insert 16 is sized so as substantially to correspond to the inner surface 12 of the recess 15 of the annular bearing race 10. The bearing insert 16 further presents an inner spherical bearing surface 18. The bearing insert 16 is truncated, so that the inner spherical bearing surface 18 of the bearing insert 16 is bounded by an upper perimeter 20 and a
lower perimeter 21. Preferably, the diameter (and thus circumference) of the upper perimeter 20 is substantially identical to that of the lower perimeter 21. That is to say, the upper 20 and lower 21 perimeters define substantially identical circles of latitude. The upper 20 and lower 21 perimeters of the bearing insert 16 are therefore equidistant from the equator of the spherical bearing surface 18 defined by the bearing insert 16. An angular extent α of the inner circle bearing surface 18 is illustrated in figure 1.

The bearing assembly 1 further comprises an inner ball 25. The inner ball 25 comprises an outer spherical bearing surface 26. The inner ball 25 further comprises a mounting flange 27 connected to the inner ball 25 by a neck 29. The flange 27 comprises a plurality of mounting holes 28 for securing the inner ball 25 to a vehicle component, in use (not shown). Preferably the flange 27 is formed together with the inner ball 25 as single piece.

The inner ball 25 further comprises a through hole 32. An inner surface 33 of the through hole 32 is preferably substantially cylindrical. A bevelled section 34 is provided at the intersection of the inner surface 33 of the through hole 32 and the top section of the flange 27. Preferably, in its neutral position (as shown in figure 1), the longitudinal axis of the cylindrical through hole 32 is coaxial with the longitudinal axis 7 of the outer housing 2.

As the bearing assembly 1 is open at one side (at that side where the flange 27 is arranged), in one embodiment, the bearing assembly 1 further comprises a sealing gaiter 30, which prevents or reduces the ingress of foreign matter into a bearing interface 19 of the bearing assembly 1 created between the outer spherical bearing surface 26 of the inner ball 25 and the inner spherical bearing surface 18 of the bearing insert 16. The lower edge of the gaiter 30 is preferably received within an annular channel 31 provided on the top of the side wall 3 of the outer housing 2.

The inner ball 25 is truncated such that the outer spherical bearing surface 26 is bounded by an upper perimeter 35 and a lower perimeter 36. The upper perimeter 35 of the spherical bearing surface 26 marks the beginning of the transition of the spherical bearing surface 26 into the neck 29. Adjacent the lower perimeter 36 of the spherical bearing surface 26 is a substantially planar lower end face of the inner ball 25.

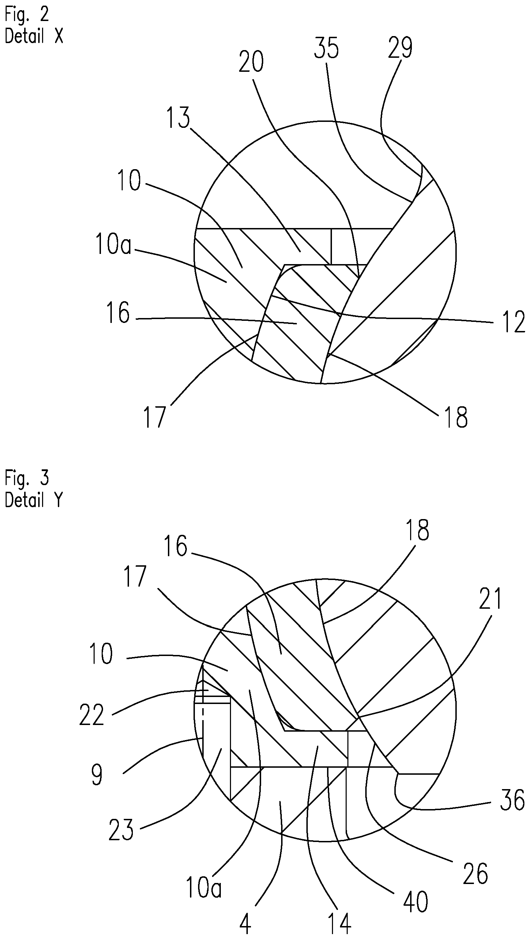

It will be noted, from figure 1, that the outer bearing surface 26 of the inner ball 25 extends beyond the inner spherical bearing surface 18 of the bearing insert 16 in both axial directions. That is to say, when the bearing assembly 1 is in its neutral position, as shown in figure 1, the lower perimeter 36 of the spherical bearing surface 26 of the inner ball 25 extends beyond the lower perimeter 21 of the inner spherical bearing surface 18 of the bearing insert 16. See figure 3.

Likewise, the upper perimeter 35 of the spherical bearing surface 26 of the inner ball 25 extends beyond the upper perimeter 20 of the inner spherical bearing surface 18 of the bearing insert 16. See figure 2. In a preferred embodiment, the outer spherical bearing surface 26 of the inner ball 25 extends axially further beyond the upper perimeter 20 of the bearing insert 16 than it does the lower perimeter 21 of the bearing insert 16. Accordingly, the circumference of the lower perimeter 36 of the inner ball 25 is larger than the circumference of the upper perimeter 35 of the inner ball 25 (where it meets the neck 29).

Preferably, the circumference of both the upper 35 and lower 36 perimeters of the spherical bearing surface 26 of the inner ball 25 are smaller than the circumference of the upper 20 and lower 21 perimeters of the inner spherical bearing surface 18 of the bearing insert 16.

Preferably, the outer diameter of the flange 27 is larger than the outer diameter of the inner ball 25. Advantageously, the distance between the centre of the flange mounting holes 28 and the longitudinal axis 7 is preferably larger than the radius r of the inner ball 25. The flange mounting holes 28 are arranged outside the through hole 32 and the through hole 32 is provided to reduce the mass of the inner ball 25.

In use, the inner ball 25 is rotatable, in all rotational degrees of freedom, relative to the bearing insert 16

The bearing insert 16 is preferably comprised of a self-lubricating bearing material, for example PTEP with PTFE or other lubricating additives. The bearing assembly 1 is filled with a lubricant, for example grease. For filling the bearing assembly 1 with the lubricant the bearing assembly 1 comprises a channel 24 perpendicular to the longitudinal axis 7. The channel 24 is arranged through the side wall 3 of the outer housing 2, the annular bearing race 10 and the bearing insert 16.

In use, as the bearing assembly 1 rotates, the longitudinal axis of the inner ball 25 will misalign with the longitudinal axis of the outer housing 2. Preferably, the maximum misalignment relative to the longitudinal (vertical) axis 7 is +/- 6°. The maximum misalignment depends on the geometrical arrangement and can be adjusted for different applications.

An advantage of the outer bearing surface 26 of the inner ball 25 extending beyond the inner bearing surface 18 of the bearing insert 16, is that, in normal use, all of the inner spherical bearing surface 18 of the bearing insert 16 will be in contact with the outer spherical bearing surface 26 of the inner ball 25 at all times.

The material of the bearing insert 16 is preferably softer than the material of the inner ball 25. The benefit of the arrangement of the present invention is that, in normal use, the potentially sharp intersection of the lower perimeter 36 of the inner ball 25 with the planar end face will not be allowed to contact the inner spherical bearing surface 18 of the bearing insert 16. As a result, less degradation of the bearing insert 16 is likely to occur.

A particular benefit of the extension of the spherical bearing surface 26 of the ball beyond that of the inner spherical bearing surface 18 of the bearing insert 16 is that, at all times (in normal use), the radial load imposed on the bearing assembly 1 is equally distributed across all of the inner spherical bearing surface 18 of the bearing insert 16.

By comparison, with the arrangement disclosed in EP1925527 and EP1650098, the lower perimeter of the bearing surface of the bearing insert extends beyond the lower perimeter of the spherical bearing surface of the ball. As a result, when the arrangement of this prior art arrangement is rotated, the size of the bearing interface changes. For a given force, an increase or decrease in the bearing surface area will cause a corresponding decrease or increase in the pressure applied to that surface, which may lead to irregular wear of the surfaces.

The arrangement of the present invention, on the other hand, promotes even wear of the bearing insert 16.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.
- 1: bearing assembly
- 2: outer housing
- 3: side wall
- 4: base
- 5: inner surface
- 6: second recess
- 7: longitudinal axis of the cylindrical side wall
- 8: mounting hole
- 9: fixing hole
- 10: annular bearing race
- 10a, b: split race portion
- 11: outer surface of the split race
- 12: inner surface of the split race
- 13: upper collar
- 14: lower collar
- 15: recess
- 16: bearing insert
- 16a, b: bearing insert portion
- 17: outer surface of the bearing insert
- 18: inner surface of the bearing insert
- 19: bearing interface
- 20: upper perimeter of the insert
- 21: lower perimeter of the insert
- 22: fixing hole
- 23: bolt
- 24: channel for filling
- 25: inner ball
- 26: outer spherical bearing surface
- 27: mounting flange
- 28: mounting hole
- 29: neck
- 30: sealing gaiter
- 31: annular channel
- 32: through hole
- 33: inner surface of the through hole
- 34: bevelled section
- 35: upper perimeter of the inner ball
- 36: lower perimeter of the inner ball
- 40: annular support sill
- α: angular extent
- r: radius

## Claims

1. A bearing assembly (1) comprising:
an outer housing (2);
a plurality of split race portions (10a, 10b) arranged at least partially within the outer housing (2) to define an annular composite bearing race (10) having an inner surface (12), the plurality of split race portions (10a, 10b) comprising two split race portions (10a, 10b) with axial split faces;
an annular bearing insert (16) comprising a plurality of bearing insert portions (16a, 16b) and arranged at least partially within the composite bearing race (10) having a truncated substantially spherical inner bearing surface (18), the plurality of bearing insert portions (16a, 16b) comprising two bearing insert portions (16a, 16b) with axial split faces, wherein the respective pairs of split faces of the split race portions (10a, 10b) and the bearing insert portions (16a, 16b) are misaligned;
an inner ball (25) having a truncated substantially spherical outer bearing surface (26), wherein the inner ball (25) is rotatably held within the bearing insert (16),
configured such that, when the longitudinal axis of the inner ball (25) is aligned with the longitudinal axis of the annular bearing insert (16), the outer bearing surface (26) of the inner ball (25) extends beyond the inner bearing surface (18) of the bearing insert (16) in both axial directions.

2. A bearing assembly (1) according to claim 1, wherein the outer housing (2) comprises a base (4) and a generally cylindrical side wall (3) upstanding from the base (4), an inner surface (5) of the side wall (3) defining a substantially cylindrical first recess.

3. A bearing assembly (1) according to claim 2, wherein the base (4) comprises a second recess (6), defining an annular support sill (40) between the lower end of the side wall and the rim of the second recess (6).

4. A bearing assembly (1) according to any preceding claim, wherein the outer housing (2) further includes a plurality of mounting holes (8), for securing the outer housing (2) to a vehicle component, in use.

5. A bearing assembly (1) according to any preceding claim, wherein the outer housing (2) further includes a plurality of fixing holes (9), for securing the split race portions (10a, 10b) to the outer housing (2) in use.

6. A bearing assembly (1) according to any preceding claim, wherein the split faces of the split race portions (10a, 10b) are arranged substantially perpendicular to the radial load imposed on the bearing assembly (1) in use.

7. A bearing assembly (1) according to any preceding claim, wherein the split race portions (10a, 10b) further comprise upper and lower collars (13, 14), bounding the inner surface (12) of the composite bearing race (10), preferably wherein the annular bearing insert (16) is received between the upper and lower collars (13, 14).

8. A bearing assembly (1) according to claim 7, wherein the radial thickness of the upper and lower collars (13, 14) is less than the radial thickness of the annular bearing insert (16).

9. A bearing assembly (1) according to any preceding claim, wherein the split race portions (10a, 10b) comprise a plurality of fixing holes (22), for securing the split race portions (10a, 10b) to the outer housing (2) in use.

10. A bearing assembly (1) according to any preceding claim, wherein the misalignment is by substantially 90 degrees about the longitudinal axis.

11. A bearing assembly (1) according to any preceding claim, wherein the inner ball (25) further comprises a mounting flange (27) connected to the inner ball (25) by a neck (29).

12. A bearing assembly (1) according to claim 11, wherein the mounting flange (27) comprises a plurality of mounting holes (28), for securing the inner ball (25) to a vehicle component, in use.

13. A bearing assembly (1) according to any preceding claim, wherein the inner ball (25) further comprises a through-hole (32).

14. A bearing assembly (1) according to any preceding claim, configured such that, when the longitudinal axis of the inner ball (25) is aligned with the longitudinal axis of the annular bearing insert (16), the outer bearing surface (26) of the inner ball (25) extends beyond the inner bearing surface (18) of the bearing insert (16) more in one axial direction than it does in the other axial direction.

## Patentansprüche

1. Lageranordnung (1) umfassend:
ein Außengehäuse (2);
eine Mehrzahl von geteilten Laufringabschnitten (10a, 10b), die mindestens teilweise innerhalb des Außengehäuses (2) angeordnet sind, um einen ringförmigen Verbundlagerlaufring (10) aufweisend eine Innenfläche (12) zu definieren, wobei die Mehrzahl von geteilten Laufringabschnitten (10a, 10b) zwei geteilte Laufringabschnitte (10a, 10b) mit axialen geteilten Flächen umfasst;
einen ringförmigen Lagereinsatz (16), der eine Mehrzahl von Lagereinsatzabschnitten (16a, 16b) umfasst und mindestens teilweise innerhalb des Verbundlagerlaufrings (10) aufweisend eine verkürzte im Wesentlichen sphärische innere Lagerfläche (18) angeordnet ist, wobei die Mehrzahl von Lagereinsatzabschnitten (16a, 16b) zwei Lagereinsatzabschnitte (16a, 16b) mit axialen geteilten Flächen umfasst, worin die jeweiligen Paare geteilter Flächen der geteilten Laufringabschnitte (10a, 10b) und der Lagereinsatzabschnitte (16a, 16b) fehlausgerichtet sind;
eine innere Kugel (25) aufweisend eine verkürzte im Wesentlichen sphärische äußere Lagerfläche (26), worin die innere Kugel (25) drehbar innerhalb des Lagereinsatzes (16) gehalten ist,
derart konfiguriert, dass, wenn die Längsachse der inneren Kugel (25) mit der Längsachse des ringförmigen Lagereinsatzes (16) ausgerichtet ist, sich die äußere Lagerfläche (26) der inneren Kugel (25) in beiden Axialrichtungen über die innere Lagerfläche (18) des Lagereinsatzes (16) hinaus erstreckt.

2. Lageranordnung (1) nach Anspruch 1, worin das Außengehäuse (2) eine Basis (4) und eine generell zylindrische von der Basis (4) hochstehende Seitenwand (3) umfasst, wobei eine Innenfläche (5) der Seitenwand (3) eine im Wesentlichen zylindrische erste Aussparung definiert.

3. Lageranordnung (1) nach Anspruch 2, worin die Basis (4) eine zweite Aussparung (6) umfasst, wodurch ein ringförmiges Stützelement (40) zwischen dem unteren Ende der Seitenwand und dem Rand der zweiten Aussparung (6) definiert wird.

4. Lageranordnung (1) nach einem vorhergehenden Anspruch, worin das Außengehäuse (2) ferner eine Mehrzahl von Montagelöchern (8), zum Sichern des Außengehäuses (2) an einer Fahrzeugkomponente im Betrieb, beinhaltet.

5. Lageranordnung (1) nach einem vorhergehenden Anspruch, worin das Außengehäuse (2) ferner eine Mehrzahl von Befestigungslöchern (9), zum Sichern der geteilten Laufringabschnitte (10a, 10b) am Außengehäuse (2) im Betrieb, beinhaltet.

6. Lageranordnung (1) nach einem vorhergehenden Anspruch, worin die geteilten Flächen der geteilten Laufringabschnitte (10a, 10b) im Wesentlichen senkrecht zur radialen Last, die im Betrieb auf die Lageranordnung (1) einwirkt, angeordnet sind.

7. Lageranordnung (1) nach einem vorhergehenden Anspruch, worin die geteilten Laufringabschnitte (10a, 10b) ferner obere und untere Bünde (13, 14) umfassen, die die Innenfläche (12) des Verbundlagerlaufrings (10) begrenzen, vorzugsweise, worin der ringförmige Lagereinsatz (16) zwischen den oberen und unteren Bünden (13, 14) aufgenommen ist.

8. Lageranordnung (1) nach Anspruch 7, worin die radiale Dicke der oberen und unteren Bünde (13, 14) weniger als die radiale Dicke des ringförmigen Lagereinsatzes (16) ist.

9. Lageranordnung (1) nach einem vorhergehenden Anspruch, worin die geteilten Laufringabschnitte (10a, 10b) eine Mehrzahl von Befestigungslöchern (22), zum Sichern der geteilten Laufringabschnitte (10a, 10b) am Außengehäuse (2) im Betrieb, umfassen.

10. Lageranordnung (1) nach einem vorhergehenden Anspruch, worin die Fehlausrichtung im Wesentlichen 90 Grad um die Längsachse beträgt.

11. Lageranordnung (1) nach einem vorhergehenden Anspruch, worin die innere Kugel (25) ferner einen Montageflansch (27) umfasst, der durch einen Hals (29) mit der inneren Kugel (25) verbunden ist.

12. Lageranordnung (1) nach Anspruch 11, worin der Montageflansch (27) eine Mehrzahl von Montagelöchern (28), zum Sichern der inneren Kugel (25) an einer Fahrzeugkomponente im Betrieb, umfasst.

13. Lageranordnung (1) nach einem vorhergehenden Anspruch, worin die innere Kugel (25) ferner ein Durchgangsloch (32) umfasst.

14. Lageranordnung (1) nach einem vorhergehenden Anspruch, derart konfiguriert, dass, wenn die Längsachse der inneren Kugel (25) mit der Längsachse des ringförmigen Lagereinsatzes (16) ausgerichtet ist, sich die äußere Lagerfläche (26) der inneren Kugel (25) in einer Axialrichtung mehr als in der anderen Axialrichtung über die innere Lagerfläche (18) des Lagereinsatzes (16) hinaus erstreckt.

## Revendications

1. Ensemble rotule (1), comprenant :
un corps extérieur (2) ;
une pluralité de parties de chemin fendues (10a, 10b) disposées au moins en partie dans le corps extérieur (2) pour définir un chemin de roulement composé annulaire (10) ayant une surface intérieure (12), la pluralité de parties de chemin fendues (10a, 10b) comprenant deux parties de chemin fendues (10a, 10b) avec des faces fendues axiales ;
une garniture de rotule annulaire (16) comprenant une pluralité de parties de garniture de rotule (16a, 16b) et disposée au moins en partie dans le chemin de roulement composé (10) ayant une surface d'appui intérieure tronquée sensiblement sphérique (18), la pluralité de parties de garniture de rotule (16a, 16b) comprenant deux parties de garniture de rotule (16a, 16b) avec des faces fendues axiales, les paires respectives de faces fendues des parties de chemin fendues (10a, 10b) et des parties de garniture de rotule (16a, 16b) sont désalignées ;
une rotule intérieure (25) ayant une surface d'appui extérieure tronquée sensiblement sphérique (26), la rotule intérieure (25) étant maintenue en rotation dans la garniture de rotule (16),
l'ensemble rotule étant conçu de sorte que, quand l'axe longitudinal de la rotule intérieure (25) est aligné avec l'axe longitudinal de la garniture de rotule annulaire (16), la surface d'appui extérieure (26) de la rotule intérieure (25) s'étend au-delà de la surface d'appui intérieure (18) de la garniture de rotule (16) dans les deux directions axiales.

2. Ensemble rotule (1) selon la revendication 1, dans lequel le corps extérieur (2) comprend une base (4) et une paroi latérale généralement cylindrique (3) s'élevant à partir de la base (4), une surface intérieure (5) de la paroi latérale (3) définissant un premier creux sensiblement cylindrique.

3. Ensemble rotule (1) selon la revendication 2, dans lequel la base (4) comprend un second creux (6) définissant un appui de support annulaire (40) entre l'extrémité inférieure de la paroi latérale et le bord du second creux (6).

4. Ensemble rotule (1) selon l'une quelconque des revendications précédentes, dans lequel le corps extérieur (2) comprend en outre une pluralité de trous de montage (8) permettant de fixer le corps extérieur (2) à un composant de véhicule, lors de l'utilisation.

5. Ensemble rotule (1) selon l'une quelconque des revendications précédentes, dans lequel le corps extérieur (2) comprend en outre une pluralité de trous de fixation (9) permettant de fixer les parties de chemin fendues (10a, 10b) au corps extérieur (2) lors de l'utilisation.

6. Ensemble rotule (1) selon l'une quelconque des revendications précédentes, dans lequel les faces fendues des parties de chemin fendues (10a, 10b) sont disposées sensiblement perpendiculairement à la charge radiale exercée sur l'ensemble rotule (1) lors de l'utilisation.

7. Ensemble rotule (1) selon l'une quelconque des revendications précédentes, dans lequel les parties de chemin fendues (10a, 10b) comprennent en outre des colliers supérieur et inférieur (13, 14), limitant la surface intérieure (12) du chemin de roulement composé (10),
la garniture de rotule annulaire (16) étant de préférence reçue entre les colliers supérieur et inférieur (13, 14).

8. Ensemble rotule (1) selon la revendication 7, dans lequel l'épaisseur radiale des colliers supérieur et inférieur (13, 14) est inférieure à l'épaisseur radiale de la garniture de rotule annulaire (16).

9. Ensemble rotule (1) selon l'une quelconque des revendications précédentes, dans lequel les parties de chemin fendues (10a, 10b) comprennent une pluralité de trous de fixation (22) permettant de fixer les parties de chemin fendues (10a, 10b) au corps extérieur (2) lors de l'utilisation.

10. Ensemble rotule (1) selon l'une quelconque des revendications précédentes, dans lequel le désalignement est sensiblement de 90 degrés par rapport à l'axe longitudinal.

11. Ensemble rotule (1) selon l'une quelconque des revendications précédentes, dans lequel la rotule intérieure (25) comprend en outre une bride de montage (27) reliée à la rotule intérieure (25) par un cou (29).

12. Ensemble rotule (1) selon la revendication 11, dans lequel la bride de montage (27) comprend une pluralité de trous de montage (28) permettant de fixer la rotule intérieure (25) à un composant de véhicule, lors de l'utilisation.

13. Ensemble rotule (1) selon l'une quelconque des revendications précédentes, dans lequel la rotule intérieure (25) comprend en outre un trou débouchant (32).

14. Ensemble rotule (1) selon l'une quelconque des revendications précédentes, conçu de sorte que, quand l'axe longitudinal de la rotule intérieure (25) est aligné avec l'axe longitudinal de la garniture de rotule annulaire (16), la surface d'appui extérieure (26) de la rotule intérieure (25) s'étend au-delà de la surface d'appui intérieure (18) de la garniture de rotule (16) davantage dans une direction axiale que dans l'autre direction axiale.
